# EUROPÄISCHE PATENTSCHRIFT

(11) **EP 0 965 380 B1**
(45) Veröffentlichungstag und Bekanntmachung des Hinweises auf die Patenterteilung: **23.03.2005**
(21) Anmeldenummer: 99109789.0
(22) Anmeldetag: 18.05.1999
(51) Int. Cl.: B01J 19/12, B01J 19/00, B01J 3/00

(54) **Vorrichtung zum Behandeln von Stoffen in wenigstens einem Gefäss**
Apparatus for treating substances in at least one vessel
Dispositif pour le traitement de materiaux dans au moins un récipient

(30) Priorität: 19.06.1998 DE 19827465
(43) Veröffentlichungstag der Anmeldung: 22.12.1999
(73) Patentinhaber: Mikrowellen-Systeme MWS GmbH, 7240 Küblis (CH)
(72) Erfinder: Lautenschläger, Werner, 88299 Leutkirch (DE)
(74) Vertreter: Rupp, Christian, Dipl.Phys.

(56) Entgegenhaltungen:
- DE-A- 19 518 540
- US-A- 4 347 216

## Beschreibung

### [Stand der Technik]

Die Erfindung bezieht sich auf eine Vorrichtung nach dem Oberbegriff des Anspruchs 1.

Eine Vorrichtung dieser Art ist in der Druckschrift DE 195 18 540.4 beschrieben und zeichnerisch dargestellt. Sie dient zum Verdampfen von Stoffen in einem Behälter, wobei Dämpfe mittels einer Gasspülvorrichtung aus dem Innenraum des Behälters abgesaugt werden. Im Behälter, der im Heizraum eines zugehörigen Mikrowellenofens durch einen Drehantrieb drehbar gelagert ist, sind auf einem Teilkreis mehrere Gefäße oder jeweils ein oberes und ein unteres Gefäß für den zu verdampfenden Stoff angeordnet und durch einen Gefäßhalter positioniert, der platten- bzw. scheibenförmig ausgebildet ist. Wenn an den Standplätzen jeweils zwei Gefäße übereinander angeordnet sind, ist jedem Gefäß ein Gefäßhalter zugeordnet, wobei der obere Gefäßhalter Aufnahmelöcher für die oberen Gefäße und der untere Gefäßhalter Stecksockel für die unceren Gefäße aufweisen. Der Deckel des Behälters ist in einem Drehlager drehbar und vertikal verschiebbar gelagert, das an der Dekkenwand eines den Heizraum umschließenden Gehäuses angeordnet ist. Die Zuführungsleitung der Gasspülvorrichtung ist durch einen Zuführungsanschluß in der Gehäusewand und durch einen den Deckel des Behälters durchsetzenden Kanal gebildet, so daß der zugeführte Gasstrom durch den Heizraum strömt, bevor er durch den Deckel in den oberhalb des oberen Gefäßhalters befindlichen oberen Innenraum des Behälters gelangt. Die Abfuhrungsleitung erstreckt sich vom oberen Innenraum des Schalters vertikal durch den Deckel und durch das Drehlager nach oben.

Diese bekannte Vorrichtung hat sich als vorteilhaft erwiesen, jedoch ist sie aus folgenden Gründen noch verbesserungsbedurftig.

Zum einen ist die Vorrichtung von beträchtlicher Bauhöhe, wobei sich dieser Nachteil nicht nur für den Innenraum insgesamt des Behälters sondern auch für den oberhalb des oberen Gefäßhalters befindlichen Innenraum ergibt. Zum anderen bestehen im Behälter schwierige Bedingungen zur Lagerung des oder der Gefäßhalter. Außerdem ist die Montage bzw. Demontage zumindest des oberen Gefäßhalters im Behälter schwierig.

Weiterhin durchquert bei dieser bekannten Vorrichtung der abzuführende Gasstrom der Gasspülvorrichtung den über dem Gefäßhalter befindlichen Innenraum. Hierdurch ist die Wirksamkeit der Gasspülvorrichtung in zweierlei Hinsicht eingeschränkt. Zum einen können sich die abzusaugenden Dämpfe im Innenraum verteilen, und zum anderen ist die Wirksamkeit dadurch verlangsamt, daß der Druck im Innenraum zunächst verändert werden muß, bevor die Gasspülvorrichtung stattfindet. Die Folge ist eine zeitverzögerte Wirksamkeit der Gasspülung.

In der US 4,347,216 A ist eine Mikrowellen-Heizvorrichtung mit einem Heizraum beschrieben, durch den sich ein Gassammelrohr erstreckt, an das eine Mehrzahl Anschlüsse zum dichten Anschließen von Probenbehältern angeordnet sind. Im Funktionsbetrieb werden in den Probenbehältern entstehende Gase durch die Gassammelleitung abgeführt, ohne in den Heizraum zu gelangen.

### [Aufgabe der Erfindung]

Der Erfindung liegt die Aufgabe zugrunde, bei einer Vorrichtung der eingangs angegebenen Art die Gasspülung zu verbessern.

Diese Aufgabe wird durch die Merkmale des Anspruchs 1 gelöst.

Bei der erfindungsgemäßen Ausgestaltung ist der Innenraum des Behälters durch den Gefäßhalter in einen oberen und einen unteren Innenraum getrennt. Bereits hierdurch findet eine wesentliche Verbesserung der Gasspülung statt, da der Innenraum, durch den sich dieser erstreckt in seiner Größe wesentlich reduziert ist und deshalb die Gasspülung forciert in den Gefäßen wirksam wird. Außerdem wird die Wirksamkeit der Gasströmung verbessert, weil diese die Gefäße in einer Richtung durchströmt, wobei nicht nur störende Strömungen vermieden werden sondern auch eine intensive und vollständige Spülung der Gefäße stattfindet. Demgegenüber ist die bekannte Gasspülung unzureichend, weil eine Spülung insbesondere im Grundbereich der Gefäße strömungstechnisch erschwert und unvollständig ist. Außerdem ermöglicht diese Ausgestaltung ein leistungsstarkes Trocknen eines im Gefäß befindlichen Stoffes dadurch, daß ein trockener Gasstrom das Gefäß von oben nach unten durchströmt und den Stoff intensiv kontaktiert.

Vorteilhaft liegt der Gefäßhalter auf einem an der Umfangswand des Behälters angeordneten Stützlager auf. Hierdurch wird eine einfache, stabile und kippsichere Lagerung für den Gefäßhalter erreicht, wobei innerhalb des Behälters, wo enge und unübersichtliche Raumverhältnisse bestehen, Maßnahmen zur vertikalen Lagerung und Abstützung des Gefäßhalters entfallen können. Das Stützlager kann durch einander gegenüber liegende Schulterflächen an der Umfangswand gebildet sein. Es ist vorteilhaft, das Stützlager durch sowohl an der Umfangswand als auch am Gefäßhalter angeordnete, aneinander anliegende Ringflächen zu bilden. Hierdurch wird nicht nur ein Stützlager geringer Flächenpressung sondern auch eine Trennung der oberhalb und unterhalb des platten- oder scheibenförmig als Trennelement ausgebildeten Gefäßhalters befindlichen Behälterräume erreicht. Außerdem läßt sich hierdurch eine einfache und vorteilhafte Abdichtung zwischen dem Gefäßhalter und der Umfangswand des Behälters verwirklichen, wobei die Auflage des Gefäßhalters auf den Ringflächen die Abdichtung bildet oder dazwischen eine Ringdichtung angeordnet sein kann. Die zuletzt genannten Vorteile gelten auch für die Auflage des Deckels auf dem Gefäßhalter.

Es trägt im weiteren zu einer einfachen Ausgestaltung bei, wenn das Stützlager durch den Rand des Behälters gebildet ist. Bei einer solchen Ausgestaltung braucht der Gefäßhalter bei seiner Montage lediglich auf den Rand des Behälters aufgesetzt zu werden, wo er sich in einer handhabungsfreundlichen Position nicht nur bei der Montage sondern auch zum Entfernen vom Behälter befindet.

Der Deckel kann mit seiner Umfangswand hutförmig geformt sein und mit der Umfangswand auf dem Gefäßhalter aufliegen. Hierdurch werden mehrere Vorteile erreicht. Zum einen befindet sich der Rand des Behälters in einer niedrigeren Höhe als es bei der bekannten Ausgestaltung der Fall ist, bei der sich der Rand des Behälters bis zum plattenförmigen Deckel erstreckt. Aufgrund der geringeren Randhöhe läßt sich der Behälter handhabungsfreundlicher montieren und/oder mit dem zu behandelnden Stoff beschicken oder mit den Gefäßen bestücken, weil die jeweiligen Einzelteile leichter über den Rand des Behälters bewegt werden können. Ferner läßt sich der über dem Gefäßhalter befindliche Innenraum des Behälters dadurch vorteilhaft ausnutzen, daß die Gefäße den Gefäßhalter überragen und in diesen oberen Innenraum hineinragen. Hierbei läßt sich nicht nur ein möglichst kleiner oberer Innenraum verwirklichen sondern auch die räumliche Anordnung des Behälters und Gefäßhalters verbessern sowie die Bauhöhe vermindern.

Weiterhin vorteilhaft weist das Gefäß einen oberen und einen unteren, vorzugweise verjüngten Gefäßraum auf, wobei ein flüssigkeits- und gasdurchlässiges Tragteil wie ein Sieb oder Filter im unteren Gefäßraum angeordnet ist. Bei dieser Ausgestaltung ist das Tragteil nicht nur außerhalb des oberen Gefäßraums angeordnet, sondern es wird hierdurch auch der obere Gefäßraum vergrößert und die Aufnahmekapazität vergrößert. Außerdem eignet sich diese Ausgestaltung vorzüglich für eine Benutzung eines im oberen Gefäßraum angeordneten Rührelements zum Rühren des darin angeordneten Stoffes. Aufgrund einer zwischen dem oberen und dem unteren, vorzugsweise verjüngten Gefäßraum Stufenfläche kann das Rührelement darauf lagern, ohne das Tragteil zu beschädigen, wodurch die Funktion beeinträchtigt werden könnte. Dieses Gefäß eignet sich auch zum Trocknen oder Filtrieren, wobei es durchströmt wird. Es eignet sich auch als Aufnahmegefäß für den Stoff in einer in ein Druckgefäß eingestellten Position, wobei seine untere Öffnung durch ein Verschlußteil verschlossen ist, das einen Standfuß bilden kann oder aus mikrowellenteilabsorbierendem Material bestehen kann, wobei es ein Heizelement bildet.

Weiterhin vorteilhaft steht der Innenraum des wenigstens einen Gefäßes direkt mit der Abführungsleitung in Verbindung, so daß die Gasströmung den Innenraum des Behälters nicht zu durchströmen braucht. Hierdurch lassen sich nicht nur kurze Strömungswege erreichen, sondern es findet eine forcierte Abführung der Dämpfe statt, wodurch unerwünschte Ablagerungen von Bestandteilen der Dämpfe vermieden werden und außerdem die Gasspülung beschleunigt und unverzüglich, nach Einschaltung in Funktion tritt, da der Druck im Innenraum des Behälters nicht erst verändert werden muß, bevor die Gasströmung stattfindet.

In den Unteransprüchen sind vorteilhafte Weiterbildungen beschrieben, die einfache, kleine und kostengünstige Bauweisen gewährleisten, eine Anpassung an unterschiedliche Gefäße ermöglichen, die Funktion verbessern und unterschiedliche Behandlungsmaßnahmen für den Stoff ermöglichen.

### [Beispiele]

Nachfolgend werden die Erfindung und weitere durch sie erzielbare Vorteile anhand von bevorzugten Ausgestaltungen und vereinfachten Zeichnungen näher erläutert. Es zeigen
- Fig. 1: eine erfindungsgemäße Vorrichtung in der Vorderansicht und im teilweisen Vertikalschnitt;
- Fig. 2: ein Sicherungsteil der Vorrichtung im vertikalen Halb-Schnitt und in vergrößerter Darstellung;
- Fig. 3: einen Rotor der Vorrichtung im Vertikalschnitt in abgewandelter Ausgestaltung;
- Fig. 4: einen Rotor in weiter abgewandelter Ausgestaltung in der Seitenansicht;
- Fig. 5: ein Verschlußteil für ein Gefäß als Standfuß in der Draufsicht;
- Fig. 6: einen Rotor der Vorrichtung in weiter abgewandelter Ausgestaltung im Vertikalschnitt.

Die Hauptteile der Vorrichtung sind ein Mikrowellenofen 1, ein in dessen Heizraum 2 befindlicher Rotor 3, der der Aufnahme und Halterung von vorzugsweise mehreren Gefäßen dient, und hierzu mehrere Stellplätze 4 für die Gefäße aufweist, die vorzugsweise auf einem Teilkreis verteilt angeordnet sind.

Der Heizraum 2 ist in einem quaderförmigen Gehäuse 5 aus Stahlblech mit einer vorderseitigen Verschlußtür 6 angeordnet, die am unteren Rand des Heizraums 2 auf- und abklappbar gelagert ist. Der Rotor 3 befindet sich auf oder direkt über dem Boden des Heizraums 2 und ist um eine vertikale Drehachse 7 drehbar gelagert und durch einen vorzugsweise den Boden von unten durchfassenden Drehantrieb 8 drehbar oder hin und her schwenkbar.

Der Heizraum 2 ist durch eine Mikrowellenheizung beheizbar. Hierzu dient ein nicht dargestellter Mikrowellengenerator (Magnetron) zur Einkopplung von Mikrowellen in den Heizraum 2. Der Drehantrieb 8 ist beim Funktionsbetrieb der vorrichtung vorzugsweise gleichzeitig mit der Mikrowellenheizung einschaltbar, um eine gleichmäßige Erwärmung in den noch zu beschreibenden Gefaßen zu erzielen. Hierbei kann der Rotor 3 kontinuierlich drehen oder hin und her schwenken, z.B. um etwa 180°.

Der Vorrichtung ist wenigstens eine Zuführungsleitung 9 und eine Abführungsleitung 11 zugeordnet, die die Wandung des Gehäuses 5 durchsetzen und der Zu- und Abführung eines Gasstromes dienen.

Die Hauptteile des Rotors 3 sind ein plattenförmiges Bodenteil 12, das den Standboden eines topfförmigen Aufnahmebehälters 13 bildet oder auf dem ein solcher Aufnahmebehälter 13 steht. Zwischen dem Bodenteil 12 und dem Drehantrieb 8 besteht eine Drehantriebsverbindung 14, vorzugsweise in Form einer formschlüssig wirksamen Steckverbindung, so daß der Rotor 3 aus dem Heizraum 2 entnommen oder abgehoben und wieder eingestellt oder aufgesteckt werden kann.

Im aus einer Bodenwand 13a und einer Umfangswand 13b bestehenden Aufnahmebehälter 13 befindet sich ein erster Gefäßhalter Hl, bestehend aus einer Bodenplatte 16, einer mit dieser in zentraler Position verbundenen und sich nach oben erstrekkenden Säule 17 und einer in einem vertikalen Abstand von der Bodenplatte 16 mit der Säule 17 verbundenen, vorzugsweise mit einem insbesondere runden Loch 18 auf die Säule 17 aufgesteckten und auf einer Schulter 19 sitzenden Mittelplatte 21, wobei die Bodenplatte mehrere oberseitige, auf einem Teilkreis verteilt angeordnete Kalotten 22 aufweist und die Mittelplatte 21 damit vertikal fluchtende Durchgangslöcher 23 aufweist, die die Stellplätze 4 bilden, z. B. zwölf Stuck, und in die erste hohzylindrische Gefäße 24 von oben einstellbar und mit geringem Bewegungsspiel aufgenommen sind. Die Mittelplatte 21 ist durch eine Drehsicherungsvorrichtung 25, z.B. durch einen radialen, in ein Loch der vorzugsweise verjungten Säule 17 eingesetzten und diese radial überragenden Sicherungsstift 26 und eine ihn aufnehmende Ausnehmung 27 oder Schlitz in der Mittelplatte 21 so drehgesichert, daß die Position der Durchgangslocher 23 über den Kalotten 22 gewährleistet ist.

Über der Mittelplatte 21 befindet sich in einem vertikalen Abstand davon eine Tragscheibe 28, die durch eine Drehsicherungsvorrichtung 29 mit der zentralen Säule 17 verbindbar ist, die koaxial mit den Durchgangslöchern 23 angeordnete und vorzugsweise nach unten durch eine Schulter 31 verjüngte Aufnahmelöcher 32 aufweist, und die dicht mit dem oberen Randbereich der Umfangswand 13b abschließt. Bei der vorliegenden Ausgestaltung überragt die einen zweiten Gefäßhalter H2 bildende Tragscheibe 28 auf einem an der Umfangswand 13b des Behälters 13 angeordneten Stützlager 10 auf. Das Stützlager 10 kann durch mehrere einander gegenüberliegende Schulterflächen oder durch eine in Umfangsrichtung durchgehende Schulterfläche in Form einer ringförmigen Lagerfläche 10a gebildet sein, auf der die Tragscheibe 28 mit einer nach unten weisenden Lagerfläche 10b aufliegt. Hierdurch wird der sich unterhalb der Tragscheibe 28 befindliche Behälterraum vom über der Tragscheibe 28 angeordneten Raum getrennt.

Bei der vorliegenden Ausgestaltung überragt die Tragscheibe 28 den oberen Rand der Umfangswand 13b radial, wobei sie mit einem unseren zylindrischen Abschnitt 33 in die oberseitige runde Öffnung 34 des Aufnahmebehälters 13 einfaßt und vorzugsweise eine Ringnut 35, insbesondere mit einem die Lagerflache 10a bildenden Dichtungsring 36 im Ringnutgrund, aufweist, in der der obere Rand der Umfangswand 13b aufgenommen und centriert ist.

Zur Verbindung der Saule 17 mit der Tragscheibe 28 weist letztere vorzugsweise ein zentrales Loch 37 auf, mit dem es auf, den oberen, vorzugsweise hohlzylindrischen Endbereich der Saule 17 mit geringem Bewegungsspiel aufsetzbar ist, wobei die Drehsicherungsvorrichtung 29 durch einen der Drehsicherungsvorrichtung 25 entsprechenden radialem Sicherungsstift 26 in der Säule 17 und eine ihn aufnehmende Ausnehmung 27 oder Schlitz in der Tragscheibe 28 gebildet sein kann. Die Drehsicherungsvorrichtungen sind somit Steckverbindungen 20, die sich von oben montieren bzw. nach oben demontieren lassen.

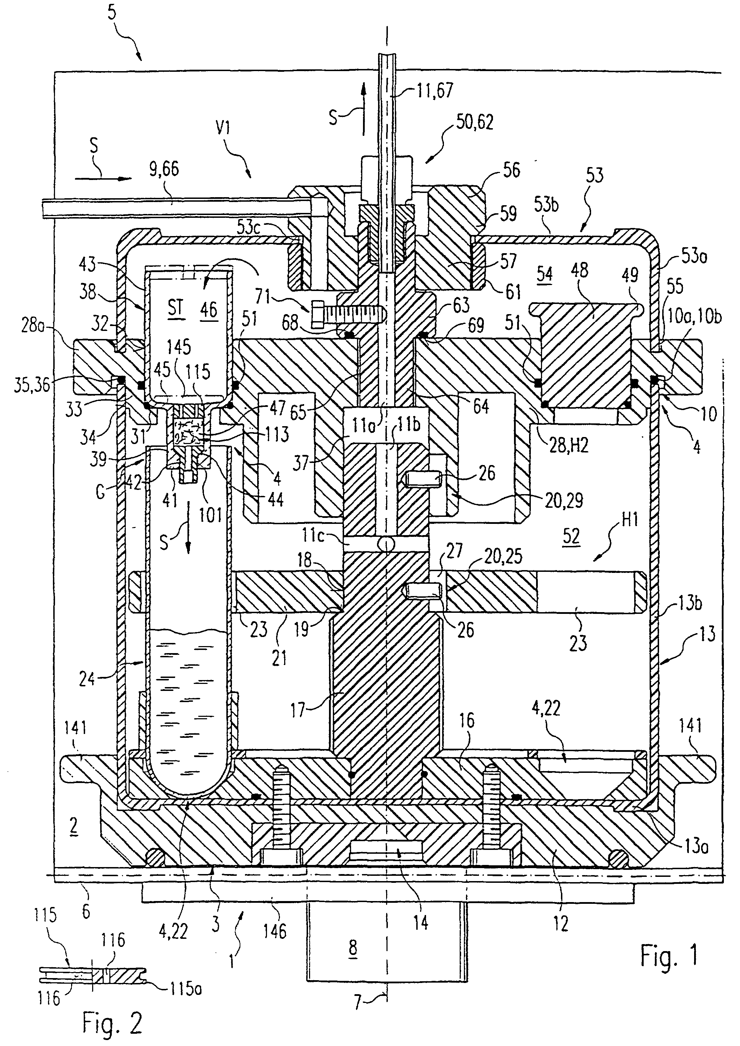

In die Aufnahmelöcher 32 sind obere bzw. zweite Gefäße 38 gleicher oder geringerer Anzahl wie die Gefäße 24 von oben mit geringem Bewegungsspiel einsetzbar, die vorzugsweise eine hohlzylindrische Form mit einem unteren, koaxial verjungten, vorzugsweise ebenfalls hohlzylindrischen Fortsatz 39 aufweisen, in dessen Boden 41 ein vorzugsweise zentrales und insbesondere rundes Loch 42 angeordnet ist. Die große Umfangswand, die kleine Umfangswand, die letztere miteinander verbindende, vorzugsweise radiale Stufenwand, der obere größere Gefäßraum und der untere kleinere Gefäßraum sind mit 43 bis 47 bezeichnet. Die Anordnung ist vorzugsweise so getroffen, daß in der Funktionsstellung das untere Ende des Fortsatzes 39 geringfügig z.B. etwa einige Millimeter in das Gefäß 24 eintaucht, wie es Fig. 1 zeigt.

Die nicht mit zweiten Gefäßen 38 besetzten Aufnahmelöcher 32 können im Funktionsbetrieb jeweils mit einem Stopfen 48 verschlossen werden, der vorzugsweise die Tragscheibe 28 nach oben überragt und dadurch vorzugsweise mit einem oberen Flansch 49 einen Griffansatz zum Einstecken oder Herausziehen. bildet. In den Aufnahmelöchern 32 ist vorzugsweise eine Ringdichtung 51 für den oder die oberen Gefäße 38 oder den oder die Stopfen 48 vorgesehen, die durch eine Ringnut und einen darin sitzenden Dichtungsring gebildet sein kann. Unterhalb der Tragscheibe 28 ist somit ein abgedichteter unterer Innenraum 52 im Aufnahmebehälter 13 gebildet.

Auf der Tragscheibe 28 befindet sich ein hutförmiger Deckel 53 mit einer vorzugsweise hohlzylindrischen Umfangswand 53a und einer etwa radialen Deckenwand 53b, der einen oberen Innenraum 54 umschließt, in den die die Tragscheibe 28 nach oben überragenden Gefäße 38 hineinragen, wobei der untere Rand des Deckels 53 in eine oberseitige Ringnut 55 in der Tragscheibe 28 mit geringem Bewegungsspiel einfassen kann. In der Deckenwand 53b ist zentral eine Dreh-Durchführung 50 für die Leitungen 9, 11 vorgesehen, die im Funktionsbetrieb einen Stillstand der Leitungen 9, 11 ermöglicht, während der Rotor 3 bzw. der Aufnahmebehälter 13 gedreht wird. Die Drehdurchführung 50 kann jedoch auch dann vorhanden sein, wenn ledigsich ein Hin- und Herschwenken erfolgt. Die Dreh-Durchführung 50 kann zwischen verschiedenen, mit ihr verbundenen Bauteilen ausgebildet sein, wobei jeweils eine dichte Anordnung gewährleistet ist. Eine drehbare Leitungs-Durchführung 50 ist dann erforderlich, wenn der Drehantrieb 8 kontinuierlich dreht. Wenn der Drehantrieb 8 nur in und her schwenkt, ist keine drehbare Durchführung erforderlich, wenn die Leitungen 9, 11 so flexibel sind, so daß der Rotor 3 hin und her schwenken kann. Bei der vorliegenden Ausgestaltung ist ein Durchführungsteil 56 für die Zu- und Abführungsleitungen 9, 11 angeordnet. Das Durchführungsteil 56 weist einen unteren zylindrischen Ansatz 57 auf, der in ein rundes Lagerloch 53c in der Deckenwand 53b einfaßt, wobei eine obere Schulter 59 des Durchführungsteils 56 auf dem oberen Lochrand aufliegt und ein auf den Ansatz 57 aufgestecktes oder aufgeschraubtes Ringteil 61, z.B. eine aufgeschraubte Mutter, die Deckenwand 53b zwischen sich und der Schulter 59, z.B. mit geringem Bewegungsspiel aufnimmt oder klemmt. Zwischen den drehbar ineinander gelagerten Teilen der Dreh-Durchführung 50 ist jeweils ein Drehlager 62 gebildet, das die Drehbarkeit und Abdichtung gewährleistet.

Vom Durchführungsteil 56 ragt zentral ein Zapfen 63 nach unten, der einteilig daran ausgebildet sein kann oder in ein zentrales Loch des Durchführungsteils 56 fest oder drehbar eingesetzt sein kann, und dessen unterer Endbereich mit der Tragscheibe 28 verbunden ist, vorzugsweise mit seinem unteren, insbesondere verjungten und runden Endzapfen 64 mit Bewegungsspiel in ein zentrales Loch 65 der Tragscheibe 28 einfaßt, so daß er von oben im Sinne einer Steckverbindung einsteckbar ist. Der Endzapfen 64 kann jedoch in die Tragscheibe 28 einschraubbar sein.

Die vorzugsweise durch flexible Schläuche 66, 67 gebildeten Zu- und Abführungsleitungen 9, 11 durchsetzen das Durchführungsteil 56 außermittig und koaxial, wobei die Zuführungsleitung 9 seitlich neben dem Zapfen 63 aus dem Durchfuhrungsteil 56 mündet und die Abführungsleitung 11 sich koaxial durch den Zapfen 63 erstreckt. Der Anschluß der Schläuche 66, 67 ist durch an sich bekannte Anschlußstutzen oder dergleichen Elemente gewährleistet.

Der Deckel 53 bildet mit dem Durchführungsteil 56 und mit oder ohne dem Zapfen 63 eine Baueinheit, die auf die Tragscheibe 28 aufsetzbar und entfernbar ist. Zur Abdichtung zwischen dem Zapfen 63 und der Tragscheibe 28 ist ein in einer Ringnut angeordneter Dichtungsring 68 vorgesehen, der bei der vorliegenden Ausgestaltung in einer auf der Tragscheibe 28 angeordneten Schulter 69 des Zapfens 63 angeordnet ist. In der Abführungsleitung 11 ist vorzugsweise eine vierstellbare Drossel 71 vorgesehen, so daß die abzuführende Gasmenge einstellbar ist. Die Drossel 71 kann durch eine radial in den Zapfen 63 eingeschraubte Einstellschraube gebildet sein. Die Abführungsleitung 11 ist durch einen koaxialen Kanal 11a, 11b im Zapfen 63 und im oberen Endbereich der Säule 17 gebildet, wobei zum letzteren Kanal ein oder mehrere radiale Löcher 11c in der Säule 17 unterhalb der Tragscheibe 28 führen.

Das vorerwähnte Drehlager 62 kann zwischen dem Durchführungsteil 56 und dem Deckel 53 einerseits sowie dem Zapfen 63 andererseits oder - wenn das Durchführungsteil 56 mit dem Deckel 53 fest verbunden ist - zwischen dem Deckel 53 und der Tragscheibe 28 ausgebildet sein oder - wenn das Durchführungsteil 56 fest mit dem Zapfen 63 verbunden ist - zwischen letzterem und der Tragscheibe 28 vorgesehen sein. Wesentlich ist, daß die durch Bohre oder Schlauche gebildeten Leitungen 9, 11 stillstehen können, während der Aufnahmebehälter 13 im Funktionsbetrieb dreht.

Mit der soweit beschriebenen Vorrichtungsanordnung V1 kann im weiter unten noch beschriebenen Funktionsbetrieb eine mit Pfeilen S gekennzeichnete Gasströmung, insbesondere ein vorzugsweise inertes und insbesondere trockenes Spülgas oder Luft, erzeugt werden, die durch die Zuführungsleitung 9 zugeführt und durch die Abführungsleitung 11 abgeführt wird, wobei sie sich durch den oberen Innenraum 52, die oberen Gefäße 38, die unteren Gefäße 24 und den unseren Innenraum erstreckt. Hierdurch ist eine Gasspülvorrichtung G für die Innenräume des Aufnahmebehälters 13 und der Gefäße 24 geschaffen.

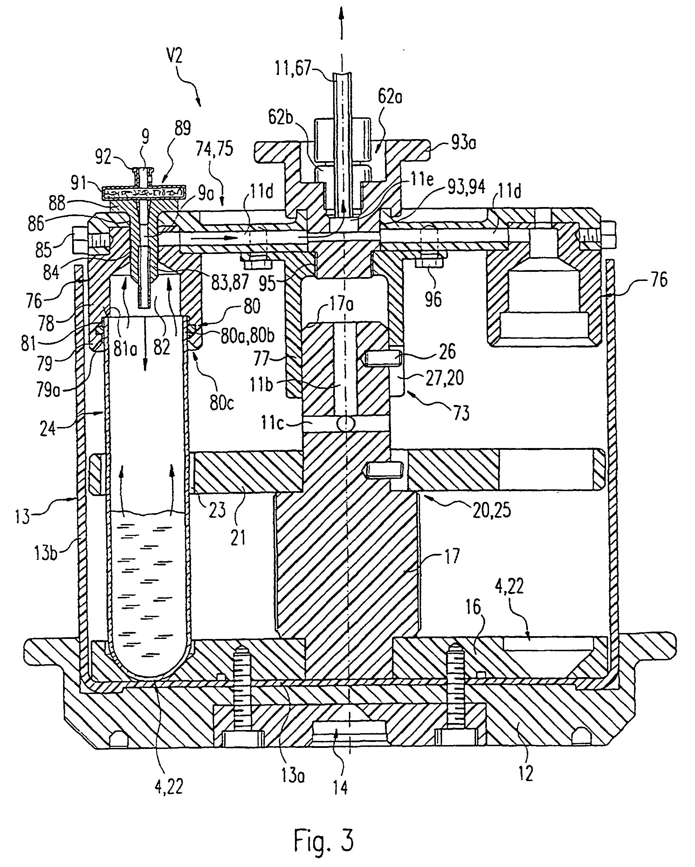

Bei der Ausgestaltung nach Fig. 3, bei der gleiche oder vergleichbare Teile mit gleichen Bezugszeichen versehen sind, ist anstelle des Deckels 53 und der Tragscheibe 28 mit den oberen Gefäßen 24 ein Verbindungsteil 75 vorgesehen, das ein Tragteil 74 für in der Anzahl der Stellplätze 4 vorgesehene Gefäß-Anschlußteile 76 aufweist, zu denen jeweils Zuführungleitungen 9 und Abführungsleitungen 11 oder zugehörige Leitungszweige gehören, so daß das oder die unteren Gefäße 24 gezielt mit dem Gasstrom beaufschlagt werden können, ohne daß dieser sich durch den oder die Innenräume des Aufnahmebehälters 13 erstreckt.

Das Verbindungsteil 75 weist einen von ihm zentral nach unten ragenden Verbindungszapfen 77 auf, der durch eine insbesondere durch eine Steckverbindung gebildete Verbindungsvorrichtung mit dem oberen Endbereich der Säule 17 in einer solchen Drehstellung verbindbar ist, daß die Anschlußteile 76 vertikal mit den Gefäßen 24 fluchten. Hierbei kann eine zur Drehsicherungsvorrichtung 29 passende oder identische Drehsicherungsvorrichtung 73 mit einem radialen Sicherungsstift 26 in der Säule 17 und einer Ausnehmung 27 im Verbindungszapfen 77 vorgesehen sein.

Im Rahmen der Erfindung ist es möglich, daß die Ausgestaltung nach Fig. 3 mit einem Aufnahmebehalter 13 eine besondere Vorrichtung bildet oder so zur Vorrichtung gemäß Fig. 1 paßt daß der Deckel 53 und die Tragscheibe 28 gegen das Verbindungsteil 75 austauschbar sind und somit ein und derselbe Aufnahmebehälter 13 zum einen mit der Tragscheibe 28 und dem Deckel 53 und zum anderen mit dem Verbindungsteil 75 durch Umbau ausgerüstet werden kann. Die Vorrichtungsanordnung gemäß Fig. 3 ist mit V2 bezeichnet.

Die Anschlußteile 76 sind durch vom Verbindungsteil 75 nach unten ragende Ansätze 78 gebildet, die mit einer Ringwand 79 einer unterseitig offenen Ausnehmung oder Stufenausnehmung 81 den oberen Rand der unteren zugehörigen Gefäße 24 übergreifen und vorzugsweise mit der Stufe 81a der Stufenausnehmung 81 auf dem Rand der Gefäße 24 aufliegen. Oberhalb der Stufenfläche 81a ist in den Ansätzen 78 vorzugsweise ein domförmiger Freiraum 82 vorgesehen, in den sich zentral von oben ein das freie Ende der Zuführungsleitung 9 bildendes Rohr 83 erstreckt, das oberhalb der Unterkante der Ringwand 79 endet. Am Umfang des Rohrs 83 ist ein vorzugsweise durch einen Ringkanal gebildeter Kanal 84 vorgesehen, von dem sich jeweils ein Abführungsleitungszweig 11d zur gemeinsamen Abführungsleitung 11 hin erstreckt. Die vorhandenen Abführungsleitungszweige 11d erstrecken sich vom Kanal 84 vorzugsweise radial einwärts zu einem axialen Kanalabschnitt 11e, an den die gemeinsame Abführungsleitung 11 angeschlossen ist.

Es ist vorteilhaft, zwischen der Umfangswand des oder der Gefäße 24 und dem Anschlußteil 76, insbesondere der Ringwand 79, eine Ringdichtung vorzusehen, die eine Abdichtung zur Umgebung gewährleistet. Dabei ist zu berücksichtigen, daß ein Bewegungsspiel zwischen der Umfangswand des Gefäßes 24 und der Ringwand 79 des Anschlußteils 76 erwünscht ist. Zum einen deshalb, um das Gefäß 24 leicht und handhabungsfreundlich in die so gebildete Steckfassung einstecken und wieder herausziehen zu können, und zum anderen deshalb, weil das Gefäß 24 und die Ringwand 79 aus unterschiedlichen Materialien bestehen können, die bei den entstehenden beträchtlichen Temperaturschwankungen zwecks Vermeidung von Klemmungen ein beträchtliches Spiel zwischen dem Gefäß 24 und der Ringwand 79 erfordern. Ein weiterer Vorteil einer Dichtung mit einem Dichtungsring, der elastisch gegen die Umfangswand des Gefaßes 24 drückt, besteht auch darin, daß hierdurch eine elastische Klemmverbindung zwischen dem Gefäß und im Anschlußteil 76 geschaffen wird, die es ermöglicht, das oder die Gefäße 24 mit den zugehörigen Anschlußteilen 76 aus dem Aufnahmebehälter 13 herauszuheben und wieder einzusetzen, falls dies gewünscht ist. Bei der vorliegenden Ausgestaltung ist die Ringdichtung 80 mit dem Dichtungsring 80a zwischen der Ringwand 79 und der Umfangswand des Gefäßes 24 angeordnet, wobei der Dichtungsring 30a vorzugsweise in einer Ringnut 80b angeordnet ist, die sich in der Innenfläche der Ringwand 79 befindet. Zwecks Erleichterung des Einführens des Gefäßes 24 in die so gebildete Steckfassung ist es vorteilhaft, am freien Rand der Umfangswand des Gefäßes 24 eine Schräge oder Rundung vorzusehen, die beim Einschieben des Gefäßes 24 als konvergente Einführungsfläche für den Dichtungsring 80a fungiert und ein leichtes Einführen ermöglicht. Die Ringdichtung 80 mit dem Dichtungsring 80a kann auch zwischen der oberen Stirnfläche des Gefäßes 24 und der Stufenfläche 81a angeordnet sein, wobei mit Ausnahme der Klemmverbindung die vorbeschriebenen Vorteile ebenfalls erreicht werden.

Die Anschlußteile 76 können einteilig an einem, das Anschlußteil 76 bildende Scheibe angeformt sein oder separate Teile, die lösbar mit dem Tragteil 74 verbindbar sind, z.B. durch Schrauben. Bei der vorliegenden Ausgestaltung sind die Anschlußteile 76 jeweils von unten mittels einer Zapfenverbindung einsteckbar und durch eine radiale Klemmschraube 85 arretierbar. Es ist vorteilhaft, der Vorrichtung bzw. dem Tragteil 74 ein oder mehrere unterschiedliche Satze von Anschlußteilen 76 zuzuordnen, die wahlweise austauschbar sind, und die an Gefäße 24 unterschiedlicher Form und/oder Große angepaßt sind. Hierdurch ist es möglich, die Vorrichtungsanordnung V2 durch Austausch der Anschlußteile 76 in einfacher und kostengünstiger Weise an unterschiedliche Gefäße 24 anzupassen.

Daß das freie Ende der Zuführungsleitung 9 bildende Rohr 83 kann Teil eines von oben in ein Loch 86 des Verbindungsteils 75 einsteckbaren Zapfen 87 gebildet sein, der mit einem Flansch 88 auf dem Verbindungsteil 75 aufliegt und von einem die Zuführungsleitung 9 bildenden axialen Kanal 9a durchsetzt ist, an dem ein Anschlußteil 89 mit einem Filter 91 und einem Anschlußstutzen 92 für den zugehörigen Zuführungsschlauch anschließbar sein kann.

Bei der Vorrichtungsanordnung V2 gemäß Fig. 3 bei der ein Deckel 53 entfallen kann, ist anstelle einer Dreh-Durchführungsverbindung eine Drehverbindung für die Abführungsleitung 11 erforderlich, wenn der Rotor 3 drehen oder gegebenenfalls schwenken soll. Bei einer solchen Drehverbindung 62a soll das Verbindungsteil 74 bezüglich der Abführungsleitung 11 oder einem Ambauteil desselben drehbar sein. Hierzu kann das Rohr oder der Schlauch 67 in einer Anschlußbuchse 62b drehbar und dicht gelagert sein. Ein solches Drehlager 62 läßt sich auch bei einer Dreh-Durchführung 50 (Fig. 1) vorteilhaft verwenden.

Der Abführungs-Kanalabschnitt 11e kann in einem Zapfenteil 93 angeordnet sein, der von oben in ein Loch 94 des Verbindungsteils 75 einsteckbar ist, wobei der Verbindungszapfen 77 mit einem Loch 95 auf das Zapfenteil 93 oder einem verjüngten Zapfen aufsteckbar oder aufschraubbar ausgebildet sein kann und z.B. durch Befestigungsschrauben 96 gesichert sein kann.

Zum Umrüsten der Vorrichtungsanordnung V1 zur Vorrichtung V2 werden der Deckel 53 und die Tragscheibe 28 nach oben entnommen und das Verbindungsteil 75 von oben eingesetzt, was aufgrund der vorhandenen Steckverbindungen 20 im Sinne eines Austausches handhabungsfreundlich und schnell erfolgen kann. Zur Entnahme nach oben kann die Tragscheibe 28 durch manuelles Untergreifen ihres radialen Vorsprungs 28a uber die Umfangswand 13b handhabungsfreundlich manuell angehoben werden. Das Einsetzen von oben des Verbindungsteils 75 laßt sich ebenfalls leicht und handhabungsfreundlichen durchführen, wobei es z.B. an einem Flansch 93a des Zapfenteils 93 ergriffen und in den Aufnahmebehälter 13 abgesenkt werden kann, wobei aufgrund der Steckverbindung und der Drehsicherungsvorrichtung die Verbindung selbsttätig erfolgt. Durch Innenrundungen oder Innenschrägen 79a an der Ringwand 79 läßt sich das Aufsetzen an den oder die Gefäße 24 leicht durchführen. Entsprechende Einführungsrundungen oder -schrägen 17a sind auch zwischen der Säule 17 und dem Zapfenteil 93 vorgesehen, wobei sie an einem oder an beiden dieser Teile gangeordnet sein können. Entsprechende Schrägen oder Rundungen sind auch bei der Vorrichtungsanordnung V1 am Zapfen 17 oder an der Tragscheibe 28 vorgesehen, um das Aufsetzen der Tragscheibe 28 oder des Deckels 53 zu erleichtern.

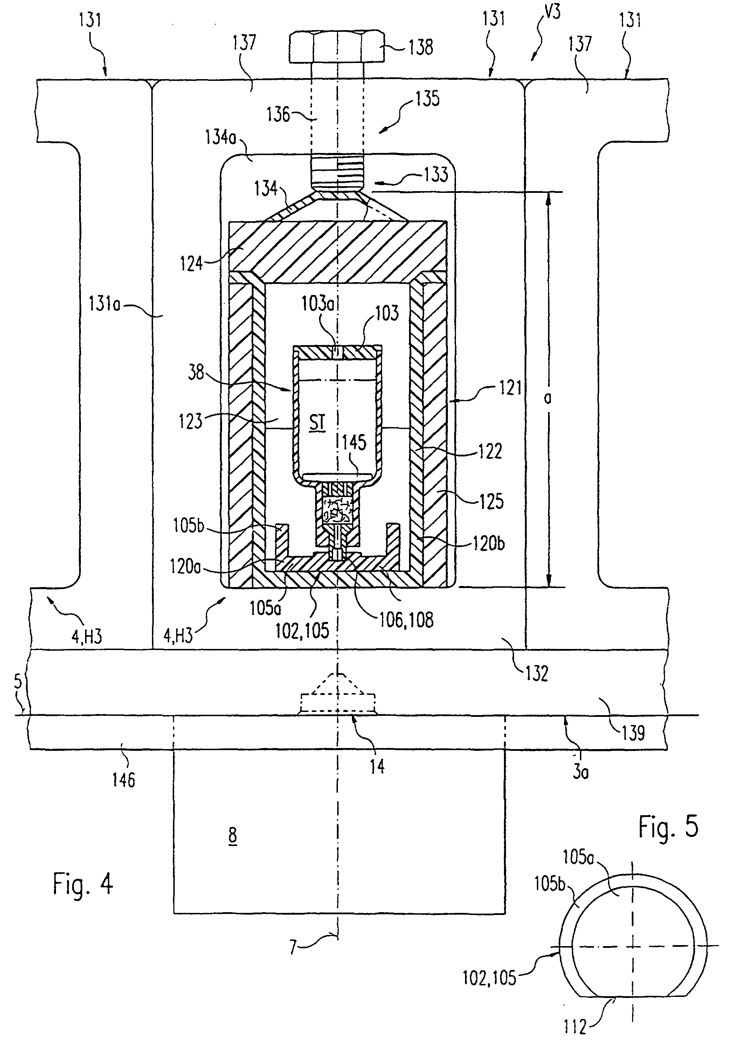

Das oder die zweiten bzw. oberen Gefäße 38 sind bezüglich ihrer unterschiedlich großen Gefäßräume 46, 47 jeweils durch eine Stufenfläche 44, 45 begrenzt. Die untere Stufenfläche 45 wird dadurch gebildet, daß ein vorzugsweise zentrales Loch 101 in der Bodenwand 41 kleiner bemessen ist als die Querschnittsgröße bzw. der Innendurchmesser des unteren kleineren Gefäßraums 47, wobei die Stufenflache 45 radial oder nach unten kegelförmig konvergent ausgebildet sein kann. Für einen noch zu beschreibenden Funktionszweck gemäß Fig. 1 sind die Gefäße 38 in der beschriebenen Weise gebrauchsfertig. Für einen weiteren, ebenfalls noch zu beschreibenden Funktionszweck gemäß Fig. 4 ist das bzw. sind die Gefäße 38 jeweils durch ein Verschlußteil 102 für das Loch 101 verschließbar. Außerdem kann dem Gefäß 38 ein Deckel 103 mit wenigstens einer Öffnung 103a zum Verschließen der oberseitigen Offnung des oberen Gefäßraums 46, ein noch zu beschreibender Filter, das auf die größere oder kleinere Stufenflache 44, 45 aufsetzbar ist, zugeordnet sein

Beim Ausführungsbeispiel nach Fig. 4 ist das Verschlußteil 102 durch ein Fußteil 105 gebildet, das in seiner Querschnittsgröße großer bemessen ist, als die Querschnittsgröße des Fortsatzes 39, und ein Verschlußelement zum Verschließen des Loches 101 aufweist.

Bei der vorliegenden Ausgestaltung ist in das Loch 101 eine Hülse 106 eingesetzt, die vorzugsweise mit einem Hülsenflansch an ihrem inneren Ende die Stufenfläche 44 hintergreift und daran anliegen kann, wobei der Hülsenflansch eine der Form der Innenseite der Bodenwand 41 entsprechende Form aufweisen kann, z.B. eine radiale oder kegelförmige Anlagefläche aufweisen kann. Die Hülse 106 ist so lang bemessen, daß ihr freies Ende den Fortsatz 39 um ein paar Millimeter überragt. Das Verschlußelement am Fußteil 105 ist durch ein Loch 108 von einer der Querschnittsgröße und Abmessung der vorzugsweise hohlzylindrischen Hülse 106 derart entsprechender Form und Größe, daß der überstehende Hülsenteil mit einer manuell überdrückbaren radialen Klemmspannung in das Loch 108 einsteckbar und wieder lösbar ist. Das Fußteil 105 kann aus einer das Loch 108 aufweisenden Bodenwand 105a sowie einer von letzterer nach oben ragenden Umfangswand 105b bestehen, wie es Fig. 4 zeigt. Die Umfangswand kann ein seitliches Durchgangsloch 112 aufweisen, durch daß eine im Fußteil 105 befindliche Flüssigkeit abfließen kann. Bei der vorliegenden Ausgestaltung ist das Durchgangsloch 112 durch eine seitliche Abflachung des Fußteils 105 gebildet, s. Fig. 5.

Beim vorliegenden Ausführungsbeispiel ist ein Filter 113 vorgesehen, das auf der Stufenfläche 45 aufliegen kann und als flache Scheibe aus gasdurchlässigem Material wie Flies gebildet sein kann und/oder im kleinen Gefäßraum 46 angeordnat sein kann und durch die vorerwähnte flache Filterscheibe gebildet sein kann, in dem letztere in dem bezüglich seiner Abmessung kleineren Gefäßraum 47 eingestopft wird. Anstelle eines Filters 113 kann auch ein in anderes flüssigkeits- oder gasdurchlässiges Tragteil angeordnet sein, z.B. ein Sieb.

Um zu verhindern, daß der Filter 113 nach oben aus dem Gefaßraum 47 herauswandert, ist es vorteilhaft, oberhalb des Filters 113 in ein den Stromungsdurchgang gewahrleistendes Sicherungselement 115, z.B. eine perforierte Deckscheibe auf dem Filter 113 anzuordnen, die durch Eigengewicht oder durch eine Klemmspannung gegen Abheben gesichert sein kann. Beim vorliegenden Ausführungsbeispiel ist die Deckscheibe in ihrer Querschnittsgröße so groß bemessen, daß sie in den Gefäßraum 47 einklemmbar ist. Es ist vorteilhaft, hierzu am Umfang der Deckscheibe ein oder zwei voneinander beabstandete Klemmlippen 115a vorzusehen, die aufgrund ihrer insbesonderen elastischen Nachgiebigkeit eine radiale Klemmspannung gewährleistern. Die Deckscheibe kann ein oder mehrere Durchgangslöcher 116 für den Strömungsdurchgang aufweisen.

Bei der Anordnung gemäß Fig. 4 befindet sich ein soweit beschriebenes Gefäß 38 in einem Druckbehälter 121, bestehend aus einem topfförmigen hohlzylindrischen Druckgefäß 122, in dessen Innenraum 123 das Gefäß 38 mit dem Fußteil 105 von oben einsetzbar ist. Das Druckgefäß 122 ist durch einen Deckel 124 verschließbar, der von oben auf den flachen Rand des Druckgefäßes 122 aufsetzbar ist. Das Druckgefäß 122 ist von einem hohlzylindrischen Verstärkungsmantel 125 umgeben und mit der Umfangswand des Druckgefäßes 122 fest verbunden, z.B. durch Klemmspannung.

Das Verschlußteil 102 bzw. Fußteil 105 und der Mantel 125 bestehen aus einem Material, das beschränkt mikrowellenabsorbierend bzw. mikrowellenteilabsorbierend ist. Bei der Mikrowellenbestrahlung werden diese Teile direkt erwärmt, so daß sie Heizelemente 120 a, 120 b bilden. Ein mikrowellenteilabsorbierendes Material eignet sich z.B. Kunststoff, bei dem Partikel aus mikrowellenabsorbierenden Material, z.B. Kohlenstoff, eingebettet sind. Ein solcher Kunststoff ist unter der Bezeichnung WEFLON bekannt und auf dem Markt erhältlich.

Dem oder jedem Druckgefäß 122 ist eine allgemein mit 131 bezeichnete Verschlußvorrichtung zugeordnet, bestehend aus einem Bodenteil 132 sowie einem oberen Widerlager 133, die in einem vertikalen Abstand zueinander angeordnet sind, der größer ist als die vertikale Abmessung a des Druckbehälters 121 und eines auf dem Deckel 124 angeordneten elastisch komprimierbaren Druckstucks 134, die eine allgemein mit 135 bezeichnete Gefäßanordnung bilden, die in einem zwischen dem Bodenteil 131 und dem Widerlager 133 angeordneten Freiraum 134a einsetzbar ist.

Der Verschlußvorrichtung 131 ist eine Spannvorrichtung 135 zum vertikalen Zusammendrücken und Vorspannen des Druckstücks 134 zugeordnet. Bei der vorliegenden Ausgestaltung ist die Spannvorrichtung 135 durch eine Schraube 136 gebildet, die von oben in eine Deckenwand 137 eingeschraubt ist und vorzugsweise an seinem oberen Ende ein Werkzeugangriffselement 138 zum Ein- und Ausschrauben der Schraube 136 aufweist. Die Bodenwand 131 mit einem Standplatz 4 an ihrer Oberseite und die Deckenwand 137 sind durch zwei Seitenwinde 131a zu einem kasten- oder rahmenförmigen Aufnahmekörper mit einer seitlichen Einstellöffnung und einer unterseitigen Standfläche verbunden.

Es sind in der Anzahl der Standplätze 4 vorhandene Druckbehälter 121 und Verschlußvorrichtungen 131 vorhanden, die mit den Druckbehälter 121 für einen besonderen, noch zu beschreibenden Funktionszweck in bzw. auf den Rotor 3 oder in bzw. auf einem besonderen Rotor 3a gem. Fig. 4 stellbar sind. Wenn es sich um einen besonderen Rotor 3a handelt, der z.B. lediglich eine Aufstellplatte 139 mit Stellplätzen 4 aufweisen kann, ist dieser Rotor in einem besonderen Mikrowellenofen oder in den vorbeschriebenen Mikrowellenofen 1 einstellbar, wobei vorher der vorbeschriebene Rotor 3 gegen den besonderen Rotor 3a auszutauschen ist. Hierzu wird der Rotor 3 aus dem Heizraum 2 entfernt, wobei er handhabungsfreundlich an seitlich abstehenden Griffteilen 141 der Bodenplatte 12 oder einem daran angeordneten Grifflansch ergriffen werden kann, und der Rotor 3a in den Heizraum 2 eingesetzt.

Der Vorrichtung bzw. dem Mikrowellenofen 1 sind außerdem eine Waage, ein Bildschirm und eine Tastatur zugeordnet, die nicht dargestellt sind. Diese Teile sind durch elektrische Steuerleitungen und Signalleitungen mit einer vorhandenen elektrischen Steuereinrichtung mit einem Prozessor verbunden, was ebenfalls nicht dargestellt ist. Auf dem Bildschirm können Funktions- und Meßdaten, z.B. die der Waage, angezeigt werden. Mit der Tastatur können Funktions- und bestimmte Programmdaten von Handlungsprogrammen eingegeben werden. Des weiteren ist dem Mikrowellenofen 1 eine Leistungsregeleinrichtung für die Mikrowellenheizung zugeordnet, die vorzugsweise einen wählbaren Sollwert regelt und die Heizleistung bei einem Istwert unterhalb des Sollwertes erhöht. Der Sollwert kann von einer bestimmten Behandlungstemperatur oder einem bestimmten Druck in den Gefäßen, insbesondere in dem Druckgefäß 122 abhängig geregelt sein. Hierzu sind entsprechende Druck- und Temperaturmeßwertgeber vorgesehen, deren Signale der Steuervorrichtung zugeführt werden.

Wie bereits erwähnt, können mit der Vorrichtung mehrere Behandlungsmaßnahmen eines oder mehrerer zu behandelnder Stoffe durchgeführt werden, die jeweils einzeln oder einander folgend an ein und demselben Stoff ST durchgeführt werden können. Dabei kann der Stoff ST unterschiedliche Aggregatzustände aufweisen, z.B. ein flüssiger oder fester Stoff sein, wobei im letzteren Fall der Stoff ST körnig bzw. pulverförmig sein kann oder ein zusammenhängendes klumpenförmiges Stoffgefüge haben kann. In den einzelnen Gefäßen können während einer Behandlung gleiche oder unterschiedliche Stoffe behandelt werden.

Die vorbenannten Behandlungsmaßnahmen, die sich mit der Vorrichtung durchführen lassen, sind z.B. Trocken, Filtrieren, Extrahieren bei Unter- und Überdruck und Aufbereitung bei Erwärmung und vorzugsweise auch Überdruck. Nachfolgend werden hierfur einige Behandlungsmaßnahmen beispielhaft beschrieben.

Zum Trocknen wird die Vorrichtung in der Anordnung gem. Fig. 1 durch Eingabe von zu trocknendem, andeutungsweise mit ST bezeichneten Stoff in ein oder mehrere Gefäße 38 beschickt, wobei nicht besetzte Standplätze 4 mit Stopfen 48 verschlossen werden, wodurch ein geschlossener unterer Innenraum 52 entsteht. Das Beschicken des Stoffes ST kann bei abgehobenem Deckel 53 im Heizraum 2 oder auch bei aus dem Heizraum 2 entfernten Rotor 3 erfolgen. Der Stoff ST kann körnig bzw. pulverförmig oder auch stückig sein. Der Trocknungsvorgang wird nach dem Beschicken durch ein des funktionsbetriebs der Vorrichtung eingeleitet, wobei der vorzugsweise trockene Gasstrom S durch den Aufnahmebehälter 13 geführt wird, insbesondere gesaugt wird. Dabei kann die Heizung der Vorrichtung eingeschaltet oder nicht, d.h. die Trocknung kann bei Normaltemperatur (Raumtemperatur) oder auch bei einer Erwärmung bzw. Erhitzung des Stoffes ST erfolgen. Beim Trocknen wird der Stoff ST von oben mit dem Gasstrom beaufschlagt, im vorliegenden Falle durchsetzt, wobei der Gasstrom dem Stoff ST Feuchtigkeit entzieht und abtransportiert. Die Feuchtigkeit kann dem Gasstrom in einem außerhalb des Gehäuses 5 befindlichen Kondensators abgeschieden werden, so daß der Gasstrom im Kreislauf wieder durch den Aufnahmebehälter 13 geführt werden kann. Die Gasstrommenge kann hier durch die Schraube 71 gebildete Einstellvorrichtung eingestellt werden. Bei diesem Funktionsbetrieb entsteht dann, wenn der Gasstrom durch Saugen erzeugt wird, ein Unterdrück im Behälterinnenraum 52, der eine selbsttätige Abdichtung bewirkt, weil die Tragscheibe 28 selbsttatig gegen das Behälterunterteil gedrückt wird. Der Feuchtigkeitsanteil kann durch Wiegen des Stoffes ST vor und nach der Behandlung ermittelt werden. Der Stoff ST verbleibt während der Behandlung im Gefaßraum 46, da es von dem Filter 47a zurückgehalten wird.

Ein Filtrieren eines Stoffes ST kann in gleicher Weise erfolgen, wobei es sich hierbei um ein flüssiges oder gasförmiges Material handeln kann. Auch in diesem Fall kann der filterbare Anteil des Stoffes ST durch Wiegen vor und nach der Behandlung ermittelt werden.

Die Vorrichtung eignet sich in der Vorrichtungsanordnung V1 gem. Fig. 1 auch zum Extrahieren des Stoffes ST bei Normaldruck (Raumdruck) und in der Vorrichtungsanordnung V2 gem. 3 zum Extrahieren des oder eines Stoffes ST bei unterdruck. In ersterem Fall wird das oder die Gefäße 38 zusätzlich zum Stoff ST ein Lösungsmittel eingegeben, das bei der Behandlung vorzugsweise bei gleichzeitiger Erwärmung der Materialbestandteile aus dem Stoff ST extrahiert. Hierbei kann der Gasstrom S ausgeschaltet oder eingeschaltet sein. Im letzteren Falle erfolge die Behandlung schneller.

Die Vorrichtung eignet sich in den Vorrichtungsanordnungen V1, V2 auch zum Verdampfen, wobei durch die Erwärmung des Stoffes und/oder durch den Unterdruck die Verdampfung gefördert wird und der Unterdruck eine Senkung des Siedepunktes bewirkt, so daß auch entsprechend wärmeempfindliche Stoffe behandelt werden können. Die mit dem Gasstrom S abgeführten Dämpfe können im bereits erwähnten Kondensator kondensiert und gesammelt werden, wobei der Gasstrom S im Kreislauf durch den Aufnahmebehälter 13 geführt werden kann. Nichtverdampfungsfähige Rückstände sammeln sich je nach Eingabe des Stoffes in wenigstens einem Gefäß 38 oder 24, wobei die Menge der Rückstände durch Wiegen vor und nach der Behandlung ermittelt werden können.

Ein Beispiel für eine solche Verdampfungsbehandlung ist z.B. der vorbeschriebene Extraktionsvorgang, bei dem der extrahierte Stoffanteil mit dem Lösungsmittel in das wenigstens eine Gefäß 24 gelange und dort durch Verdampfen im vorbeschriebenen Sinne als Ruckstand separiert und ermittelt werden kann.

Beim Verdampfungsvorgang in der Vorrichtungsanordnung V2 werden die Innenraume der Gefäße 24 direkt gespült. Der Innenraum des Aufnahmebehälters 13 braucht deshalb nicht evakuiert werden.

Die Vorrichtungsanordnung V3 gem. Fig. 4 eignet sich u.a. Zum Extrahieren und Aufbereiten eines Stoffes ST bei Erwarmung und Überdruck. Der Rotor 3a bildet mit den Verschlußvorrlchtungen 131 bei dieser Ausgestaltung einen dritten Gefäßhalter H3. In diesem Behandlungsfall wird ein Stoff ST in das Gefäß 38 eingegeben, woraufhin der Druckbehälter 121 geschlossen wird und in die Verschlußvorrichtung 131 eingestellt sowie durch die Spannvorrichtung 135 mit einer bestimmten Spannung verschlossen wird. Zusätzlich kann ein oder das gleiche Lösungsmittel in den Innenraum 123 des Druckgefäßes 122 neben dem Gefäß 38 eingefüllt werden. Die Niveauhöhen der Losungsmittelfüllungen sind beispielsweise andeutungsweise dargestellt. Das Fußteil 105 wirke bei der Bestrahlung mit Mikrowellen als Heizelement, das die Innenräume 123, 47 direkt erwärmt, wobei dann, wenn das Lösungsmittel im Innenraum 123 vorhanden ist, das Lösungsmittel, jenachdem, ob es Wärme absorbierend ist oder nicht, ein Warmeübertragungsmittel oder ein weiteres Heizmittel bildet. Gleiches gilt auch für das im Gefäßraum 46 befindliche Lösungsmittel. Der Stoff ST selbst wird unmittelbar erwärmt, wenn es mikrowellenabsorbierend ist. Ein mikrowellendurchlässiger Stoff ST wird dagegen unmittelbar durch das Lösungsmittel im Gefäß 38 und/oder durch das Lösungsmittel im Innenraum 123 und/oder durch das Heizelement 120a mittelbar erwärmt. Während der Behandlung im Druckgefäß 122 stellt sich aufgrund der Erhitzung und auch Verdampfung von Stoffbestandteilen ein Überdruck ein, der das Eindringen des Lösungsmittels in den Scoff ST und die Extraktion forciert. Wenn dabei ein zu hoher Innendruck entsteht, besteht keine Gefahr einer Beschädigung für das Druckgefäß 122, da die Spannvorrichtung 135 aufgrund der Elastizität des Druckstücks 127 nachgiebig ist und deshalb der Deckel 124 geringfügig abzuheben vermag, so daß ein schädlicher Überdruck in einem Extremfall entweichen kann.

In vergleichbarer Weise eignet sich die Vorrichtungsanordnung V3 auch zum Aufbereiten eines Stoffes für weitere analytische Zwecke, wobei diese Aufbereitung mit oder ohne einem Lösungsmittel und mit order ohne anderan Hifsstoffen erfolgen kann.

Der vorbeschriebene Druckextraktionsvorgang kann durch einer weiteren Extraktionsvorgang in der Vorrichtungsanordnung V2 weitergeführt werden. Der druckextrahierte Stoff ST kann dazu mit dem jeweiligen Gefäß 38 auf einem oberen Standplatz 4 eingestellt werden, wobei ein zusatzliches Lösungsmittel oder das sich im Innenraum 123 befindliche Lösungsmittel in den wenigstens einen Behälter 38 eingefüllt werden kann und die Extraktion bei Unterdruck weitergeführt oder nur nachgespült werden kann.

Es ist auch möglich, den bei der Druckextraktion extrahierten und im Lösungsmittel befindlichen Materialanteil in wenigstens ein Gefäß 24 zu füllen und das Lösungsmittel im vorbeschriebenen Sinne zu verdampfen, so daß das Extrakt als Rückstand gewonnen und gegebenenfalls durch Wiegen wie im vorbeschriebenen Sinne mengenmäßig ermittelt werden kann.

Die Vorrichtungsanordnungen V1, V2 und/oder V3 sind auch jeweils als einzelne Vorrichtung funktionsfähig und vorteilhaft. Sie eignen sich auch vorzüglich für eine Behandlung des oder der Stoffe bei Rührung mittels einem Rührelement 145 im jeweiligen Gefäß 24, 38, das in den Figuren 3 und 4 beispielhaft dargestellt ist. Ein solches, z.B. stab- oder kreuzförmiges Rührelement 145 mit einem Rührantrieb 146 ist an sich bekannt und z.B. in der DE 195 43 401 A1 beschrieben. Es besteht aus ferromagnetischem Material, weist einen magnetischen Nord- und Südpol auf und wird durch Magnetfelder in Drehung versetzt, die in Umfangsrichtung des Teilkreises, auf dem die Gefäße angeordnet sind, und aufgrund der Nord- und Südpole in den Ruhrelementen 145 deren horizontale Drehung bewirken. Die Magnetfelder können von dem unter dem Boden des Heizraums 2 angeordneten magnetischen Rührantrieb 146 erzeugt werden.

Die Vorrichcungsanordnung V1 funktioniert sowohl mit als auch ohne Deckel 53. Bei fehlendem Deckel wird mit Raumluft gearbeitet, die in die Gefaße 38 eingesaugt wird. Für diesen Fall können im Gehäuse 2 Zustramlöcher angeordnet sein, die auch eine fortwährende Zuführung gewährleisten. Das heißt, die Vorrichtungsanordnung V1 ist auch ohne Deckel 53 funktionsfähig.

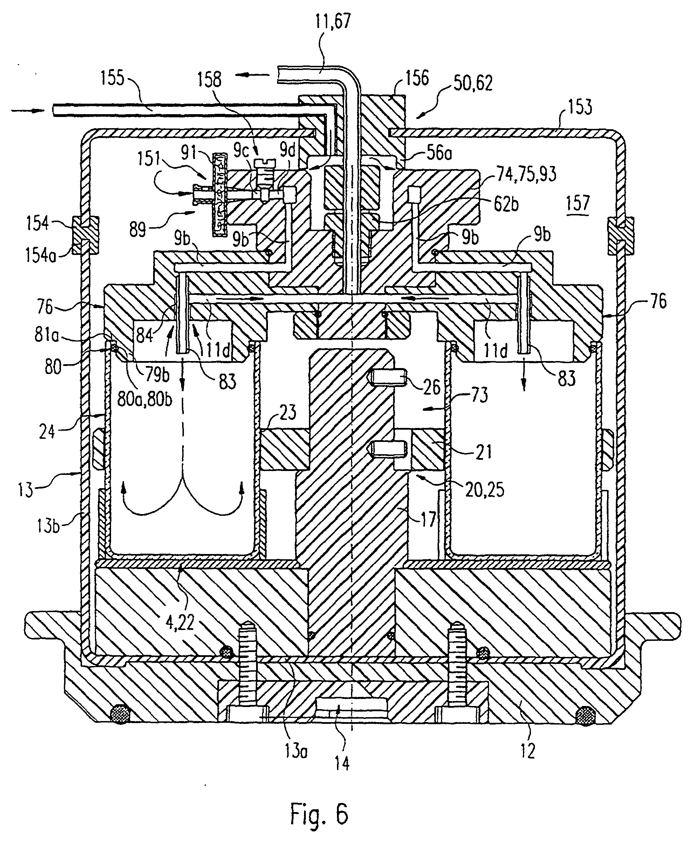

Beim Ausführungsbeispiel nach Fig. 6, bei dem gleiche oder vergleichbare Teile ebenfalls mit gleichen Bezugszeichen versehen sind, und die eine Vorrichtungsanordnung V2 zeigt, sind die Anschlußteile 76 mit einem gemeinsamen Zuführungseinlaß 151 verbunden, der am Träger 74 oder Verbindungsteil 75 außermittig angeordnet ist und mit Verzweigungsleitungen 9b verbunden ist, die vorzugsweise durch sich zu den Anschlußteilen 76, hier zu den Rohren 83, erstreckende Kanale im Verbindungsteil 75 gebildet sind. Diese Ausgestaltung hat den Vorteil, daß nur ein Filter 91 am Einlaß 151 angeordnet zu werden brancht, das z.B. in einem entsprechenden Anschlußteil 89 angeordnet sein kann. Zur Zuführungsverzweigung mündet ein gemeinsamer, hier radialer Zuführungskanal 9c in einen vorzugsweise konzentrischen Ringkanal 9d, von dem sich die Verzweigungskanäle erstrecken.

Es ist gemäß Fig. 6 außerdem vorteilhaft, auch bei einer Vorrichtungsancrdnung V2 einen Deckel 153 vorzusehen, der vorzugsweise mit einer Umfangswand hutförmig ausgebildet ist und auf dem Rand des Aufnahmebehälters 13 oder auf einem Zwischenring 154 aufliegen kann, das eine U- oder eine H-förmige Querschnittsform mit einer oder zwei Ringnuten zur Aufnahme der jeweiligen Umfangswand aufweisen kann. Diese Ausgestaltung ermöglicht es einen zweiten gemeinsamen Zuführungseinlaß 155 am Deckel 153 oder hier an einem Durchführungsteil 156 anzuordnen, wobei ein vorbeschriebenes Drehlager 62 zwischen dem Durchführungsteil 156 und dem Deckel 153 oder zwischen letzterem und der Umfangswand des Aufnahmebehälters 13 oder dem Zwischenring 154 vorgesehen sein kann. Zur vertikalen Abstutzung kann das Durchführungsteil 156 mit einer unterseitigen Schulter 56a auf dem Verbindungsteil 75 oder einem Anbauteil desselben aufliegen. Bei dieser Ausgestaltung gelangt das nachströmende Spülgas durch die Zuführungsleitung 9 und dem gemeinsamen zweiten Zuführungseinlaß 155 in den Innenraum 157 des Aufnahmebehälters 13, von wo es zum ersten Zuführungseinlaß 151 hin strömt. Unter der Schulter 56a ist eine Gasströmung gewährleistet. Bei dieser Ausgestaltung kann an einem der beiden Zuführungseinlässe 151 oder 155, hier im Bereich des Kanals 9c eine Einstellvorrichtung 158 zur Mengeneinstellung des Spülgases vorgesehen sein, hier in Form einer Schraube, die in den Kanal 9c hineinragt und von der Seite oder vorzugsweise von oben zugänglich ist. Der gemeinsame Filter 91 kann auch am Zuführungseinlaß 155 angeordnet sein. Bei der Ausgestaltung nach Fig. 6 ist ferner eine radiale Umkehrung der Steckfassung 80c für die Gefäße 24 vorgesehen. Bei dieser Ausgestaltung ist anstelle einer äußeren Ringwand 79 eine innere Ringwand 79b am zugehörigen Anschlußteil 76 vorgesehen, die mit entsprechendem Bewegungsspiel in das zugehörige Gefäß 24 einfaßt und durch eine entsprechende Ringdichtung 80 an ihrer Außenmantelfläche abgedichtet ist.

Die Einzelteile des Rotors 3 bzw. 3a bestehen abgesehen von den ein Heizelement 120a, 120b bildenden Teilen aus mikrowellendurchlässigem Material, insbesondere Kunststoff. Die Teile, die einer großen Korrosionsbelastung unterliegen, wie z.B. die Gefäße, bestehen vorzugsweise aus einem korrosionsfesten Kunststoff, wie z.B. PTFE oder PFA oder aus Glas oder aus Quarz. Die zuletzt genannten Materialen empfehlen sich wegen ihrer Transparenz vorzüglich für die Gefäße 24 und 38.

## Patentansprüche

1. Vorrichtung zum Behandeln wenigstens eines Stoffes in einem oder mehreren Gefäßen (24), vorzugsweise bei Unterdruck und Wärme, mit
einem Gehäuse (5), das einen Heizraum (2) umschließt und durch eine Verschlusstür (6) oder dergleichen zu öffnen und zu schließen ist,
einer Heizvorrichtung zum Erwärmen des oder der Stoffe, einem topfförmigen Behälter (13, 53) im Heizraum (2), der eine Bodenwand (13a) und eine Umfangswand (13b) aufweist, und in dem die Gefäße (38) an Standplätzen (4) eines Gefäßhalters (H2) positionierbar sind,
wobei die Gefäße (38) den Gefäßhalter (H2) jeweils in einem Aufnahmeloch (32) durchragen,
wobei der Gefäßhalter (H2) den Innenraum des Behälters (13, 53) in einen oberen Innenraum und einen unteren Innenraum (54, 52) trennt,
wobei eine Gasspülvorrichtung (G) mit einer Zuführungsleitung (9) und einer Abführungsleitung (11) vorgesehen ist, deren Zuführungsleitung (9) mit dem oberen Innenraum (54) verbunden ist,
**dadurch gekennzeichnet,**
**dass** die Abführungsleitung (11) mit dem unteren Innenraum (52) verbunden ist,
und wobei die Gefäße (38) von oben nach unten durchströmbar sind.

2. Vorrichtung nach Anspruch 1,
**dadurch gekennzeichnet,**
**dass** die Heizvorrichtung eine durch Mikrowellen wirksame Heizvorrichtung ist.

3. Vorrichtung nach Anspruch 1 oder 2,
**dadurch gekennzeichnet,**
**dass** der Behälter (13,53) drehbar angeordnet ist.

4. Vorrichtung nach einem der vorhergehenden Ansprüche,
**dadurch gekennzeichnet,**
**dass** an der Umfangswand (13b) des Behälters (13) ein Stützlager (10) mit einer in der Umfangsrichtung durchgehenden ringförmigen Schulterfläche (10a) angeordnet ist, auf der der Gefäßhalter (H2) aufliegt.

5. Vorrichtung nach einem der vorherigen Ansprüche,
**dadurch gekennzeichnet,**
**dass** der Gefäßhalter (H2) platten- oder scheibenförmig ausgebildet ist.

6. Vorrichtung nach einem der vorherigen Ansprüche,
**dadurch gekennzeichnet,**
**dass** der Gefäßhalter (H2) den Innenraum des Behälters (13) durch unmittelbare Anlage oder durch Zwischenlage einer Ringdichtung (36) in einen oberen und einen unteren Innenraum (52, 54) trennt.

7. Vorrichtung nach einem der Ansprüche 4 bis 6,
**dadurch gekennzeichnet,**
**dass** das Stützlager (10) durch den oberen Rand des Behälters (13) gebildet ist und der Gefäßhalter (H2) so groß ausgebildet ist, dass er auf dem Rand des Behälters (13) aufliegt.

8. Vorrichtung nach Anspruch 7,
**dadurch gekennzeichnet,**
**dass** ein Deckel (53) für den Behälter (13) mit einer Umfangswand (53a) hutförmig geformt ist und mit der Umfangswand (53a) auf dem Gefäßhalter (H2) aufliegt.

9. Vorrichtung nach Anspruch 5,
**dadurch gekennzeichnet,**
**dass** die Gefäße (38) den Gefäßhalter (H2) überragen und in den vom Deckel (53) begrenzten Innenraum (54) hineinragen.

10. Vorrichtung nach einem der vorherigen Ansprüche,
**dadurch gekennzeichnet,**
**dass** der Gefäßhalter (H2) mit einem unterseitigen Ansatz (33) in den Behälter (13) einfasst.

11. Vorrichtung nach einem der vorherigen Ansprüche 4 bis 10,
**dadurch gekennzeichnet,**
**dass** zwischen den Schulterflächen (10a, 10b) ein umlaufender Dichtungsring (36) angeordnet ist.

12. Vorrichtung nach einem der vorherigen Ansprüche 7 bis 11,
**dadurch gekennzeichnet,**
**dass** der Gefäßhalter (H2) eine Ringausnehmung (35) aufweist, in die der Rand des Behälters (13) einfasst.

13. Vorrichtung nach einem der vorherigen Ansprüche,
**dadurch gekennzeichnet,**
**dass** der Gefäßhalter (H2) den Behälter (13) radial überragt, vorzugsweise in Form eines Flansches oder einer Scheibe.

14. Vorrichtung nach einem der Ansprüche 8 bis 13,
**dadurch gekennzeichnet,**
**dass** der Gefäßhalter (H2) oberseitig eine Ringausnehmung (55) aufweist, in die der Deckel (53) mit seiner Umfangswand (53a) einfasst.

15. Vorrichtung nach einem der vorherigen Ansprüche,
**dadurch gekennzeichnet,**
**dass** in der Deckwand (53b) eines Deckels (53) des Behälters (13) ein Durchführungsteil (56) für die Zuführungsleitung (9) und/oder Abführungsleitung (11) angeordnet ist.

16. Vorrichtung nach einem der vorherigen Ansprüche,
**dadurch gekennzeichnet,**
**dass** die Abführungsleitung (11) sich im Zentrum des Behälters (13) nach oben erstreckt.

17. Vorrichtung nach einen der vorherigen Ansprüche,
**dadurch gekennzeichnet,**
**dass** das Gefäß (38) einen oberen und einen unteren Gefäßraum (46, 47) aufweist, wobei ein Sieb oder ein Filter (113) im unteren Gefäßraum (47) angeordnet ist.

18. Vorrichtung nach Anspruch 17,
**dadurch gekennzeichnet,**
**dass** der untere, vorzugsweise hohlzylindrische Gefäßraum im Querschnitt verjüngt ist und in einem verjüngten Gefäßfortsatz (39) angeordnet ist.

19. Vorrichtung nach Anspruch 18,
**dadurch gekennzeichnet,**
**dass** der obere Gefäßraum (46) eine radiale Stufenfläche (43) aufweist.

20. Vorrichtung nach einem der Ansprüche 17 bis 19,
**dadurch gekennzeichnet,**
**dass** das Sieb oder der Filter (113) durch ein strömungsdurchlässiges Sicherungsteil (115) gegen ein Wandern nach oben gesichert ist.

21. Vorrichtung nach Anspruch 20,
**dadurch gekennzeichnet,**
**dass** das Sicherungsteil (115) klemmend im Gefäß (38) sitzt, insbesondere im unteren Gefäßraum (47).

22. Vorrichtung nach einem der vorherigen Ansprüche,
**dadurch gekennzeichnet,**
**dass** unter dem oder den Gefäßen (24) jeweils ein oberseitig offenes zweites Gefäß (24) angeordnet ist.

23. Vorrichtung nach einem der vorherigen Ansprüche,
**dadurch gekennzeichnet,**
**dass** mehrere auf dem Umfang verteilt angeordnete Aufnahmelöcher (32) im Gefäßhalter (H2) vorgesehen sind und ein solches Aufnahmeloch (32) das nicht mit einem Gefäß (38) besetzt ist, mit einem Stopfen (48) verschlossen ist.

## Claims

1. Apparatus for the treatment of at least one substance in one or more vessels (24), preferably subject to partial vacuum and heat, having
a housing (5) which surrounds a heating chamber (2) and can be opened and closed by means of a sealing door (6) or the like,
a heating device for heating the substance or substances,
a pot-like container (13, 53) in the heating chamber (2), which container has a base wall (13a) and a peripheral wall (13b) and in which the vessels (38) can be positioned at stand stations (4) of a vessel holder (H2),
wherein the vessels (38) project through the vessel holder (H2) in each case in a receiving hole (32),
wherein the vessel holder (H2) divides the inner space of the container (13, 53) into an upper inner space and a lower inner space (54, 52),
wherein there is provided a gas flushing device (G) having a delivery line (9) and a discharge line (11), the delivery line (9) of which is connected with the upper inner space (54),
**characterized in that**,
the discharge line (11) is connected with the lower inner space (52),
and wherein the vessels (38) can be flowed through from above downwardly.

2. Apparatus according to claim 1,
**characterized in that**,
the heating device is a heating device effective by means of microwaves.

3. Device according to claim 1 or 2,
**characterized in that**,
the container (13, 53) is arranged to be rotatable.

4. Device according to any preceding claim,
**characterized in that**,
at the peripheral wall (13b) of the container (13) there is arranged a support bearing (10) having a shoulder surface (10a), on which the vessel holder (H2) lies, which is of continuous ring-shape in the peripheral direction.

5. Apparatus according to any preceding claim,
**characterized in that**,
the vessel holder (H2) is formed in the shape of a plate or disk.

6. Device according to any preceding claim,
**characterized in that**,
the vessel holder (H2) separates the inner space of the container (13) into an upper and a lower inner space (52, 54) by direct bearing or by means of interposition of a ring seal (36).

7. Device according to any of claims 4 to 6,
**characterized in that**,
the support bearing (10) is formed by means of the upper edge of the container (13) and the vessel holder (H2) is formed of such a size that it lies on the edge of the container (13).

8. Device according to claim 7,
**characterized in that**,
a lid (53) for the container (13) is formed in a hat shape with a peripheral wall (53a) and lies on the vessel holder (H2) with the peripheral wall (53a).

9. Device according to claim 5,
**characterized in that**,
the vessels (38) project beyond the vessel holder (H2) and project into the inner space (54) bounded by the lid (53).

10. Device according to any preceding claim,
**characterized in that**,
the vessel holder (H2) fits into the container (13) with a lower extension part (33).

11. Device according to any preceding claims 4 to 10,
**characterized in that**,
between the shoulder surfaces (10a, 10b) there is arranged a circumferential sealing ring (36).

12. Device according to any of claims 7 to 11,
**characterized in that**,
the vessel holder (H2) has a ring recess (35) into which the edge of the container (13) fits.

13. Device according to any preceding claim,
**characterized in that**,
the vessel holder (H2) projects radially beyond the container (13), preferably in the form of a flange or a disk.

14. Device according to any preceding of claims 8 to 13,
**characterized in that**,
the vessel holder (H2) has on the upper side a ring recess (54) into which the lid (53) fits with its peripheral wall (53a).

15. Device according to any preceding claim,
**characterized in that**,
there is arranged in the top wall (53b) of a lid (53) of the container (13) a through-going part (56) for the delivery line (9) and/or discharge line (11).

16. Device according to any preceding claim,
**characterized in that**,
the discharge line (11) extends upwardly in the center of the container (13).

17. Device according to any preceding claim,
**characterized in that**,
the vessel (38) has an upper and a lower vessel space (46, 47), wherein a sieve or a filter (113) is arranged in the lower vessel space (47).

18. Apparatus according to claim 17,
**characterized in that**,
the lower, preferably hollow cylindrical vessel space is tapered in cross-section and is arranged in a tapered vessel continuation (39).

19. Apparatus according to claim 18,
**characterized in that**,
the upper vessel space (46) has a radial step surface (43).

20. Apparatus according to any of claims 17 to 19,
**characterized in that**,
the sieve or the filter (113) is secured against upward displacement by means of a flow permeable securing part (115).

21. Apparatus according to claim 20,
**characterized in that**,
the securing part (115) sits in the vessel (38), in particular in the lower vessel space (47), in a clamping manner.

22. Apparatus according to any preceding claim,
**characterized in that**,
below the vessel or vessels (24) in each case there is a second vessel (24) open at the upper side.

23. Apparatus according to any preceding claim,
**characterized in that**,
there are provided a plurality of receiving holes (32) in the vessel holder (H2) arranged distributed around the periphery, and such a receiving hole (32) which is not occupied by a vessel (38) is closed with a stopper (48).

## Revendications

1. Dispositif de traitement d'au moins une substance dans un ou plusieurs récipients (24), avantageusement avec dépression et chaleur, lequel dispositif comporte
un boîtier (5) qui entoure un espace de chauffage (2) et qui peut être ouvert et fermer par une porte de fermeture (6) ou analogue
un dispositif de chauffage destiné à chauffer la substance ou les substances,
un conteneur (13, 53) en forme de cuvette qui est placé dans l'espace de chauffage (2), qui comporte une paroi de fond (13a) et une paroi périphérique (13b) et dans lequel les récipients (38) sont positionnables en des emplacements (4) d'un support de récipients (H2),
les récipients (38) traversant le support de récipients (H2) à chaque fois dans un trou de réception (32),
le support de récipients (H2) séparant l'espace intérieur du conteneur (13, 53) en un espace intérieur supérieur et un espace intérieur inférieur (54, 52),
un dispositif de rinçage par gaz (G) étant prévu qui comporte une conduite d'amenée (9), reliée à l'espace intérieur supérieur (54) et une conduite d'évacuation (11),
**caractérisé en ce que** la conduite d'évacuation (11 ) est reliée à l'espace intérieur inférieur (52) et les récipients (38) peuvent être traversés de haut en bas.

2. Dispositif selon la revendication 1, **caractérisé en ce que** le dispositif de chauffage est un dispositif de chauffage par micro-ondes.

3. Dispositif selon la revendication 1 ou 2, **caractérisé en ce que** le conteneur (13, 53) est disposé de façon à pouvoir tourner.

4. Dispositif selon l'une des revendications précédentes, **caractérisé en ce qu'**un palier d'appui (10) présentant une surface d'épaulement (10a) annulaire s'étendant dans la direction périphérique est disposé au niveau de la paroi périphérique (13b) du conteneur (13), le support de récipients (H2) reposant sur ladite surface d'épaulement (10a).

5. Dispositif selon l'une des revendications précédentes, **caractérisé en ce que** le support de récipients (H2) est conformé en plaque ou en disque.

6. Dispositif selon l'une des revendications précédentes, **caractérisé en ce que** le support de récipients (H2) sépare l'espace intérieur du conteneur (13), par appui direct ou par mise en place intermédiaire d'une garniture d'étanchéité annulaire (36), en un espace intérieur supérieur et un espace intérieur inférieur (52,54).

7. Dispositif selon l'une des revendications 4 à 6, **caractérisé en ce que** le palier d'appui (10) est formé par le bord supérieur du conteneur (13) et le support de récipient (H2) est conformé pour avoir une taille telle qu'il repose sur le bord du conteneur (13).

8. Dispositif selon la revendication 7, **caractérisé en ce qu'**un couvercle (53) destiné au conteneur (13) et doté d'une paroi périphérique (53a) est conformé en chapeau et repose sur le support de récipients (H2) au niveau de la paroi périphérique (53a).

9. Dispositif selon la revendication 5, **caractérisé en ce que** les récipients (38) font saillie au-dessus du support de récipients (H2) et à l'intérieur de l'espace intérieur (54) délimité par le couvercle (53).

10. Dispositif selon l'une des revendications précédentes, **caractérisé en ce que** le support de récipients (H2) pénètre par un appendice (33), situé du côté inférieur, dans le conteneur (13).

11. Dispositif selon l'une des revendications précédentes 4 à 10, **caractérisé en ce qu'**une bague d'étanchéité périphérique (36) est disposée entre les surfaces d'épaulement (10a, 10b).

12. Dispositif selon l'une des revendications précédentes 7 à 11, **caractérisé en ce que** le support de récipients (H2) comporte un évidement annulaire (35) dans lequel pénètre le bord du conteneur (13).

13. Dispositif selon l'une des revendications précédentes, **caractérisé en ce que** le support de récipients (H2) fait saillie radialement au dessus du conteneur (13); avantageusement sous la forme d'un flasque ou d'un disque.

14. Dispositif selon l'une des revendications 8 à 13, **caractérisé en ce que** le support de récipients (H2) comporte du côté supérieur un évidement annulaire (55) dans lequel pénètre le couvercle (53) au niveau de son bord périphérique (53a).

15. Dispositif selon l'une des revendications précédentes, **caractérisé en ce qu'**une pièce de traversée (56) destinée à la conduite d'amenée (9) et/ou à la conduite d'évacuation (11) est disposée dans la paroi de couvercle (53b) d'un couvercle (53) du récipient (13).

16. Dispositif selon l'une des revendications précédentes, **caractérisé en ce que** la conduite d'évacuation (11) s'étend vers le haut au centre du conteneur (13).

17. Dispositif selon l'une des revendications précédentes, **caractérisé en ce que** le récipient (38) comporte un espace de récipient supérieur et un espace de récipient inférieur (46, 47), un tamis ou un filtre (113) étant disposé dans l'espace de récipient inférieur (47).

18. Dispositif selon la revendication 17, **caractérisé en ce que** l'espace de récipient inférieur, avantageusement en cylindre creux, est aminci en coupe transversale et est disposé dans un prolongement de récipient aminci (39).

19. Dispositif selon la revendication 18, **caractérisé en ce que** l'espace de récipient supérieur (46) présente une surface radiale en gradins (43).

20. Dispositif selon l'une des revendications 17 à 19, **caractérisé en ce que** le tamis ou le filtre (113) est protégé par une pièce de sécurité (115) permettant l'écoulement et empêchant un déplacement vers le haut.

21. Dispositif selon la revendication 20, **caractérisé en ce que** la pièce de sécurité (115) repose avec serrage dans le récipient (38), en particulier dans l'espace de récipient inférieur (47).

22. Dispositif selon l'une des revendications précédentes, **caractérisé en ce qu'**un deuxième récipient (24), ouvert du côté supérieur, est disposé sous le récipient ou sous chacun des récipients (24).

23. Dispositif selon l'une des revendications précédentes, **caractérisé en ce qu'**il est prévu dans le support de récipients (H2) plusieurs trous de réception (32), répartis sur la périphérie, et un trou de réception (32), qui ne comporte pas de récipient (38), est fermé par un bouchon (48).
